# DEMANDE DE BREVET EUROPEEN

(11) **EP 0 659 893 A1**
(43) Date de publication de la demande: **28.06.1995**
(21) Numéro de dépôt: 94402993.3
(22) Date de dépôt: 22.12.1994
(51) Int. Cl.: C22B 3/38, C22B 17/00

(54) **Procédé d'extraction et de concentration de cadmium contenu en faibles et moyennes concentrations dans des effluents sulfuriques concentrés**

(30) Priorité: 24.12.1993 FR 9315642
(71) Demandeur: COMMISSARIAT A L'ENERGIE ATOMIQUE, F-75015 Paris (FR)
(72) Inventeur: Leybros, Jean, F-30200 Bagnols sur Ceze (FR)
(74) Mandataire: Dubois-Chabert, Guy

(57) **Abrégé**

L'invention concerne un procédé d'extraction et de concentration de cadmium contenu en faible et moyenne concentration dans des effluents sulfuriques concentrés.

Le but de l'invention est de concentrer le cadmium afin de pouvoir ultérieurement le valoriser ou le stocker sous forme de déchets.

Ce but est atteint à l'aide d'un procédé comprenant quatre étapes d'extraction successives réalisées respectivement à l'aide d'acide monothiophosphinique, d'acide chlorhydrique, de trialkylphosphate et d'eau.

Ce procédé s'applique notamment au traitement des raffinats issus de la purification de l'acide phosphorique.

## Description

La présente invention concerne un procédé d'extraction et de concentration du cadmium contenu dans des effluents comprenant notamment de l'acide sulfurique concentré, (c'est-à-dire à une concentration supérieure ou égale à 1,0 mol/l). Le procédé permet d'extraire le cadmium lorsque celui-ci est présent à une concentration faible de quelques mg/l ou à une concentration moyenne inférieure à 1 g/l environ.

La prise de conscience des effets néfastes du cadmium et d'autres métaux lourds, tels que le mercure en particulier, sur l'environnement et sur l'homme, ont amené de nombreux pays à mettre en place une réglementation rigoureuse ayant pour but de limiter les rejets d'effluents contenant ces métaux lourds, voir par exemple l'article de C. Molina et G. Lacoste, Informations Chimie n°308, Août/Septembre 1989, pp.199-205.

Les sources de pollution par le cadmium et les métaux lourds sont très variées mais les quantités de métaux présentes sont généralement faibles. Parmi les techniques envisagées pour réduire la pollution par le cadmium, une première technique consiste à remplacer le cadmium par des produits de substitution moins toxiques. Toutefois, les procédés utilisant ces produits de remplacement présentent des résultats peu ou pas satisfaisants. On connaît également une deuxième technique qui est en fait une simple concentration des métaux lourds avant stockage. Cette technique n'est pas satisfaisante car elle ne permet pas d'obtenir une concentration et une pureté suffisante du cadmium afin de pouvoir valoriser celui-ci.

Parmi les sources de pollution en cadmium connues, on citera les raffinats issus des unités de purification de l'acide phosphorique. La purification de l'acide phosphorique a fait l'objet de nombreux procédés de traitement de l'acide en amont de la chaîne mais jusqu'à dans un passé récent le traitement en aval des raffinats ne posait pas de problèmes puisque ceux-ci servaient de base à la fabrication d'engrais. Or, la législation sur le rejet de métaux lourds étant devenue plus stricte, il devient intéressant de traiter les raffinats et notamment ceux issus des procédés au tributylphosphate (TBP) qui aboutissent justement à concentrer les métaux lourds dans les raffinats. Ces derniers sont généralement constitués d'acides, et notamment d'acide sulfurique à une concentration voisine de 300 g/l, et sont chargés de grandes variétés de cations métalliques à diverses concentrations, (entre quelques milligrammes et quelques grammes par litre).

Une autre source de pollution est constituée par les déchets issus des centres d'incinération et les boues des stations d'épuration. Ces déchets sont chargés en espèces métalliques, lixiviables, ce qui ne permet pas leur rejet dans le milieu naturel. Ce type de déchets peut être lavé par des solutions acides, notamment à base d'acide sulfurique, qui ont pour but de solubiliser les métaux lourds présents et de fournir d'une part une matière solide inerte, susceptible d'être rejetée dans l'environnement et d'autre part, une solution de sulfates métalliques qu'il faut concentrer ultérieurement.

Dans l'art antérieur, on ne connaît que très peu de moyens d'extraire des métaux fortement polluants tels que le cadmium ou le mercure à partir de solutions d'acide sulfurique concentré. On ne connaît pas non plus de procédé non thermique permettant la concentration de ces métaux.

Le cadmium peut être extrait d'une solution par divers extractants tels que les extractants neutres, chélatants, basiques ou acides. Toutefois, les extractants neutres tels que le tri-butyl phosphate (TBP) permettent de séparer le cadmium d'une solution d'acide chlorhydrique, mais ne sont pas efficaces lorsque le cadmium est dans une solution d'acide sulfurique. Les extractants chélatants tels que les β-dicétones sont d'un usage plutôt limité pour l'extraction du cadmium. Les extractants basiques comme les amines permettent d'obtenir de bons résultats d'extraction, mais uniquement lorsque le cadmium est dans une solution d'acide chlorhydrique.

Enfin, parmi les extractants acides, l'acide bis(2,4,4-triméthylpentyl)monothiophosphinique, commercialisé par American Cyanamid sous le nom de marque Cyanex 302 est capable d'extraire de nombreux métaux à faible pH, voir l'article de W.A. RICKELTON, "Novel Uses for Thiophosphinic acids in solvent extraction", JOM, (5), 52, (1992). En outre, on sait d'après le brevet US 5 028 403 de W.A. RICKELTON et A.J. ROBERTSON que cet acide permet d'extraire le cadmium de solutions telles que l'acide phosphorique.

Toutefois, on ne connaît pas dans l'art antérieur de procédé permettant d'extraire efficacement le cadmium de solution d'acide sulfurique concentrée, dans des conditions satisfaisantes.

A cet effet, l'invention concerne un procédé d'extraction et de concentration de cadmium contenu à une concentration inférieure ou égale à 1 g/l environ dans un effluent contenant notamment de l'acide sulfurique à une concentration d'au moins 1 mol/l environ.

Selon les caractéristiques de l'invention, ce procédé comprend les étapes consistant à :
a) mettre dans un premier appareil d'extraction, l'effluent à traiter en contact avec un premier solvant organique capable d'extraire sélectivement le cadmium sans extraire les acides contenus dans ledit effluent, ce premier solvant organique contenant notamment un acide monothiophosphinique et un premier hydrocarbure, puis
b) mettre dans un deuxième appareil d'extraction, la solution organique chargée et en cadmium, issue du premier appareil d'extraction, en contact avec une solution acide capable d'extraire le cadmium, puis
c) mettre dans un troisième appareil d'extraction, la solution chargée en acide et en cadmium, issue du deuxième appareil d'extraction, en contact avec un deuxième solvant organique, capable d'extraire la totalité du cadmium et une fraction de l'acide, ce deuxième solvant organique contenant notamment un trialkylphosphate et un deuxième hydrocarbure, puis
d) mettre dans un quatrième appareil d'extraction la solution chargée en cadmium, en acide et en solvant, issue du troisième appareil d'extraction, en contact avec de l'eau pour extraire le cadmium et en contact avec une solution alcaline pour neutraliser l'acide, puis
e) récupérer la solution finale concentrée en cadmium.

Les étapes b) et d) du procédé sont en fait des étapes connues sous le terme anglais de "stripping" (désextraction).

Ce procédé permet de récupérer du cadmium dilué dans un effluent et de le concentrer fortement jusqu'à obtenir une solution contenant quelques dizaines à quelques centaines de grammes de cadmium par litre, cette solution étant alors valorisable. La valorisation permet d'obtenir du cadmium métal par hydrolyse par exemple, le cadmium étant alors utilisable par exemple dans des piles ou des pigments minéraux (jaune de cadmium).

De façon avantageuse, l'acide monothiophosphinique utilisé dans la première étape du procédé est l'acide bis(2,4,4-triméthylpentyl)monothiophosphinique, du fait de son bon pouvoir d'extraction et de sa sélectivité.

Le trialkylphosphate utilisé dans la troisième étape du procédé est de façon avantageuse le tri-n-butylphosphate (TBP) du fait de son bon pouvoir d'extraction des métaux lourds dans les solutions intermédiaires produites par le procédé.

Dans les deux cas précités, l'hydrocarbure utilisé est en général le tétrapropylène hydrogéné (TPH).

Au cours des diverses étapes du procédé, il est souhaitable d'une part de concentrer fortement les métaux extraits, et d'autre part, d'éviter la formation d'émulsions difficiles à décanter et qui nuiraient au bon fonctionnement hydrodynamique des appareils d'extraction. A cet effet, il convient de veiller d'une part, à utiliser un premier et un deuxième solvants organiques très concentrés et d'autre part, à ce que la phase organique soit plus légère que la phase aqueuse. Ainsi, il est nécessaire de diluer l'acide monothiophosphinique pur (densité de 0,93 et viscosité de 195.10⁻³ Pa.s, pour l'acide bis(2,4,4-triméthylpentyl)-monothiophosphinique, par exemple) et le trialkylphosphate pur (densité de 0,97 et viscosité de 4.10⁻³ Pa.s pour le TBP, par exemple), dans un hydrocarbure liquide moins dense (densité de 0,76 pour le TPH par exemple). Toutefois, le facteur de dilution ne doit pas être trop important afin de pouvoir concentrer fortement les métaux et de ne pas avoir à augmenter la taille de l'équipement d'extraction.

A cet effet, on utilise de façon avantageuse 0,1 à 0,6 mole d'acide monothiophosphinique par litre du premier hydrocarbure et de préférence 0,3 mole. De même, de façon avantageuse, le deuxième solvant organique comprend environ entre 65 et 85% en volume de trialkylphosphate par rapport au deuxième hydrocarbure et de préférence, on utilisera 80% de trialkylphosphate et 20% d'hydrocarbure.

On diminue ainsi la densité et la viscosité des deux solvants organiques utilisés tout en augmentant leur tension interfaciale avec les solutions aqueuses en contact. Ainsi, les étapes d'extraction a) et c) du procédé peuvent être réalisées à température ambiante, c'est-à-dire entre 20 et 25°C environ, ce qui réduit le coût du procédé.

L'étape d'extraction b) du procédé permet de transférer et de concentrer le cadmium extrait de l'effluent, dans une solution d'acide chlorhydrique dont le titre est ajusté de façon à obtenir la meilleure extraction possible par le trialkylphosphate dans l'étape ultérieure c). Bien que l'étape b) soit plus efficace à chaud, c'est-à-dire à une température de 50 à 55°C environ, il est préférable selon le domaine de concentration à atteindre, d'effectuer cette opération à température ambiante pour éviter la dégradation chimique des premier et deuxième solvants par l'acide chlorhydrique.

On utilise avantageusement une solution d'acide chlorhydrique comprenant 2 à 6 mol/l d'acide et de préférence 4 mol/l.

Enfin, l'étape d'extraction d) du procédé permet de concentrer le cadmium afin de le valoriser ultérieurement par une électrolyse, par exemple. De façon avantageuse, cette étape est effectuée, avec de l'eau déminéralisée et la neutralisation de la solution d'acide contenant du cadmium est effectuée à l'aide d'une solution aqueuse comprenant entre 5 et 10 mol/l environ d'hydroxyde de sodium. On obtient ainsi une solution finale aux conditions d'acidité préalablement choisies, c'est-à-dire à un pH toujours inférieur à 1,0 de façon à éviter la précipitation d'hydroxydes métalliques.

De façon avantageuse, cette étape d'extraction d) est effectuée à une température comprise entre 40 et 60°C et de préférence 50°C environ si l'on souhaite obtenir une concentration en cadmium élevée dans la solution finale.

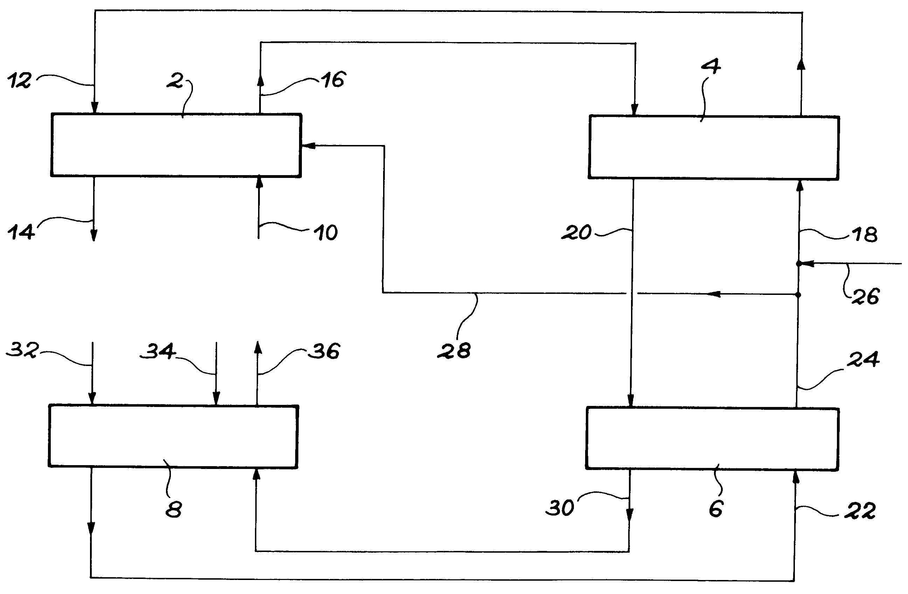

D'autres caractéristiques et avantages de l'invention ressortiront mieux à la lecture de la description suivante de l'invention, donnée à titre illustratif et non limitatif, cette description étant faite en faisant référence à la figure unique jointe.

La figure jointe illustre de façon schématique un dispositif susceptible d'être utilisé dans la mise en oeuvre du procédé selon l'invention. Ce dispositif comporte quatre appareils d'extraction liquide/liquide, référencés respectivement 2, 4, 6 et 8. Ces appareils d'extraction sont de préférence du type mélangeur-décanteur ou du type colonne d'extraction pulsée.

L'effluent à traiter 10 est introduit à l'une des extrémités du premier appareil d'extraction 2, à contre-courant d'un premier solvant organique d'extraction 12, capable d'extraire sélectivement le cadmium sans extraire les acides contenus dans ledit effluent. De façon avantageuse, le premier solvant organique 12 provient du deuxième appareil d'extraction 4, toutefois cette condition n'est pas impérative. Le raffinat 14 sortant du premier appareil d'extraction 2 contient moins de 0,2 mg/l de cadmium et peut être valorisé par ailleurs ou éliminé.

La solution organique 16 chargée en cadmium et issue du premier appareil d'extraction 2 est traitée à contre-courant dans le deuxième appareil d'extraction 4, par une solution aqueuse d'acide chlorhydrique 18.

L'opération d'extraction par l'acide chlorhydrique réalisée dans le deuxième appareil d'extraction 4 peut être conduite à la température ambiante mais il est préférable d'effectuer l'opération en chauffant légèrement jusqu'à 50°C ou plus, pour s'assurer que le solvant organique 12 sortant du deuxième appareil d'extraction 4 est suffisamment exempt de cadmium afin de ne pas créer de fuites en cadmium supérieures à 0,2 mg/l dans le raffinat sortant 14.

La solution 20 chargée en acide et cadmium et issue du deuxième appareil d'extraction 4 est introduite dans le troisième appareil d'extraction 6 où elle est traitée à contre-courant par un deuxième solvant organique 22. Le raffinat acide 24 sortant du troisième appareil d'extraction 6 est recyclé dans le deuxième appareil d'extraction 4, après avoir subi un ajustage de sa concentration par une solution 26 d'apport en acide chlorhydrique. De préférence, cette solution d'apport contient 12 mol/l d'acide chlorhydrique. La purge 28 d'une fraction de raffinat acide 24 (nécessaire au maintien constant du volume de solution circulant) est mélangée avec l'effluent à traiter 10 dans le premier appareil d'extraction 2.

La solution 30 chargée en cadmium, en acide et un solvant et issue du troisième appareil d'extraction 6 est injecté dans le quatrième appareil d'extraction 8 où elle est traitée à contre-courant par de l'eau 32, de préférence déminéralisée, introduite à l'autre extrémité de l'appareil. Une solution aqueuse alcaline 34 est également introduite dans le quatrième appareil d'extraction 8 afin de neutraliser l'acide amené par la solution 30 chargée en cadmium.

L'acidité résiduelle de la solution finale 36 est comprise entre 0,1 et 1,0 mol/l d'acide libre, soit un pH inférieur à 1,0. Cette solution constitue le produit fini à valoriser.

En outre, le solvant 22 extrait du quatrième appareil d'extraction 8 est retourné vers le troisième appareil d'extraction 6, cette caractéristique n'est toutefois pas impérative pour le bon fonctionnement du procédé.

On donne ci-après un exemple de mise en oeuvre du procédé selon l'invention.

### Exemple :

Dans une installation identique à celle qui vient d'être décrite, on traite un effluent 10 dont la composition est la suivante : 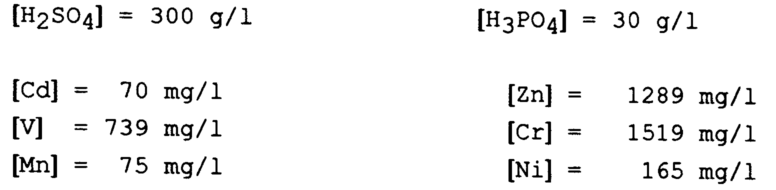
et divers autres éléments en concentration moindre tels que Pb, Co et Cu.

L'effluent à traiter 10 et le premier solvant organique 12 sont introduits dans le premier appareil d'extraction 2 avec un débit de solvant égal à 0,03 fois le débit de la phase aqueuse. Le solvant organique utilisé contient 0,3 mol/l d'acide bis(2,4,4-triméthylpentyl)-monothiophosphinique dans le TPH. L'opération d'extraction est réalisée à une température moyenne de 22°C. Le raffinat 14 obtenu contient moins de 0,2 mg/l de cadmium et la solution 16 chargée en cadmium contient environ 2,9 g/l de cadmium, les autres métaux présents étant en dehors des limites de détection analytique.

Cette solution 16 est traitée dans le deuxième appareil d'extraction 4 à contre-courant avec une solution d'acide chlorhydrique 18 dont le débit en volume est 4,5 fois plus faible que le débit de la phase organique. L'opération est réalisée à une température moyenne voisine de 50°C. En outre, le premier solvant 12 récupéré à l'issue de la deuxième étape du procédé contient moins de 15 mg/l de cadmium résiduel.

Ensuite, la solution 20, chargée en acide et en cadmium, contenant 13,5 g/l de cadmium, est traitée à contre-courant dans le troisième appareil d'extraction 6 par une solution contenant 80% de TBP et 20% de TPH et a un débit de 0,6 fois celui de la phase aqueuse. Cette opération d'extraction est réalisée à une température moyenne de l'ordre de 22°C.

La solution 30 chargée en solvant, en cadmium et en acide est traitée à contre-courant dans le quatrième appareil d'extraction 8 avec un débit en volume 6 fois plus faible d'eau déminéralisée 32. En outre, le débit de la solution de neutralisation 34 est égal à 0,1 fois le débit d'eau déminéralisée 32. L'opération est réalisée à une température moyenne de l'ordre de 50°C.

La solution finale 36 récupérée contenait environ 120 g/l de cadmium.

## Revendications

1. Procédé d'extraction et de concentration de cadmium contenu à une concentration inférieure ou égale à 1g/l environ dans un effluent (10) contenant notamment de l'acide sulfurique à une concentration d'au moins 1 mol/l environ, caractérisé en ce qu'il comprend les étapes consistant à :
a) mettre dans un premier appareil d'extraction (2), l'effluent à traiter (10) en contact avec un premier solvant organique (12) capable d'extraire sélectivement le cadmium sans extraire les acides contenus dans ledit effluent (10), ce premier solvant organique (12) contenant notamment un acide monothiophosphinique et un premier hydrocarbure, puis
b) mettre dans un deuxième appareil d'extraction (4), la solution organique(16) chargée en cadmium et issue du premier appareil d'extraction (2) en contact avec une solution acide (18) capable d'extraire le cadmium, puis
c) mettre dans un troisième appareil d'extraction (6), la solution (20) chargée en acide et en cadmium et issue du deuxième appareil d'extraction (4) en contact avec un deuxième solvant organique (22), capable d'extraire la totalité du cadmium et une fraction de l'acide, ce deuxième solvant organique (22) contenant notamment un trialkylphosphate et un deuxième hydrocarbure, puis
d) mettre dans un quatrième appareil d'extraction (8), la solution (30) chargée en cadmium, en acide et en solvant, issue du troisième appareil d'extraction (16), en contact avec de l'eau (32) pour extraire le cadmium et en contact avec une solution alcaline (34) pour neutraliser l'acide, puis
e) récupérer la solution finale (36) concentrée en cadmium.

2. Procédé selon la revendication 1, caractérisé en ce que le premier solvant organique (12) comprend 0,1 à 0,6 mole environ d'acide monothiophosphinique par litre du premier hydrocarbure.

3. Procédé selon la revendication 1 ou 2, caractérisé en ce que l'acide monothiophosphinique est l'acide bis(2,4,4-triméthylpentyl)monothiophosphinique.

4. Procédé selon la revendication 1 ou 2, caractérisé en ce que le premier hydrocarbure est le tétrapropylène hydrogéné.

5. Procédé selon la revendication 1, caractérisé en ce que la solution acide (18) contient entre 2 et 6 mol/l environ d'acide chlorhydrique.

6. Procédé selon la revendication 1, caractérisé en ce que le deuxième solvant organique (22) comprend environ entre 65 et 85% en volume de trialkylphosphate et entre 15 et 35% en volume du deuxième hydrocarbure.

7. Procédé selon la revendication 1 ou 6, caractérisé en ce que le trialkylphosphate est le trin-butylphosphate.

8. Procédé selon la revendication 1 ou 6, caractérisé en ce que le deuxième hydrocarbure est le tétrapropylène hydrogéné.

9. Procédé selon la revendication 1, caractérisé en ce que l'eau (32) utilisée à l'étape d) est déminéralisée.

10. Procédé selon la revendication 1, caractérisé en ce que la solution alcaline (34) contient environ 5 à 10 mol/l d'hydroxyde de sodium.

11. Procédé selon la revendication 1, caractérisé en ce que l'extraction de l'étape a) est effectuée à température ambiante.

12. Procédé selon la revendication 1, caractérisé en ce que l'extraction de l'étape b) est effectuée à une température comprise entre 40 et 60°C environ.

13. Procédé selon la revendication 1, caractérisé en ce que l'extraction de l'étape c) est effectuée à température ambiante.

14. Procédé selon la revendication 1, caractérisé en ce que l'extraction de l'étape d) est effectuée à une température comprise entre 40 et 60°C environ.

15. Procédé selon la revendication 1, caractérisé en ce que la première solution acide (18) utilisée dans le deuxième appareil d'extraction (4) provient du troisième appareil d'extraction (16).

16. Procédé selon la revendication 1 ou 15, caractérisé en ce que la concentration de la solution acide (18) est ajustée en continu par une solution (26) d'apport contenant 12 mol/l environ d'acide chlorhydrique

17. Procédé selon la revendication 1 ou 15, caractérisé en ce que la purge (28) d'une fraction de raffinat acide (24) provenant du troisième appareil d'extraction (6) est mélangée à l'effluent à traiter (10) introduit dans le premier appareil d'extraction (2).
